Europäisches Patentamt

European Patent Office

Office européen des brevets

(11) Publication number: 0 340 617 B1

# EUROPEAN PATENT SPECIFICATION

(45) Date of publication of patent specification: 29.03.95 (51) Int. Cl.⁶: C01B 17/69, C08J 7/14

(21) Application number: 89107557.4

(22) Date of filing: 26.04.89

(54) Apparatus and process for the generation of sulfur trioxide reagent for sulfonation of the surface of polymeric resins.

(30) Priority: 04.05.88 US 190312
04.05.88 US 190313

(43) Date of publication of application:
08.11.89 Bulletin 89/45

(45) Publication of the grant of the patent:
29.03.95 Bulletin 95/13

(84) Designated Contracting States:
BE CH DE ES GB IT LI NL SE

(56) References cited:
GB-A- 1 595 928
GB-A- 2 060 653
US-A- 4 209 592
US-A- 4 615 914

CHEMICAL ABSTRACTS, vol. 109, no. 26, December 1988, page 15, abstract no. 231776t, Columbus, Ohio, US; & JP- A - 63172703

PATENT ABSTRACTS OF JAPAN, vol. 3, no. 59 (C-46), 19 May 1979; & JP - A - 5436216

(73) Proprietor: THE DOW CHEMICAL COMPANY
2030 Dow Center,
Abbott Road
Midland,
Michigan 48640 (US)

(72) Inventor: Walles, Wilhelm E.
6648 River Road
Freeland
Michigan 48623 (US)
Inventor: Tomkinson, Donald L.
4647 Meadow Court
Auburn
Michigan 48640 (US)
Inventor: Near, David R.
3608 Lawndale Street
Midland
Michigan 48640 (US)

(74) Representative: Huber, Bernhard, Dipl.-Chem. et al
Patentanwälte
H. Weickmann, Dr. K. Fincke
F.A. Weickmann, B. Huber
Dr. H. Liska, Dr. J. Prechtel, Dr. B. Böhm
Postfach 86 08 20
D-81635 München (DE)

## Description

This invention relates to an apparatus and a process for the generation and recycling of a reagent solution of sulfur trioxide in a carrier and, more particularly, to an apparatus and a process incorporating such reagent solution for the surface treatment and sulfonation of polymeric materials.

Sulfonation of polymeric resins, that is, the introduction of the $-SO_3^-$ or $-SO_3H$ functional group onto the surface of polymeric materials is generally known. See, for example, U.S. Patent Nos. 2,832,696; 2,937,066; 3,592,724; 3,613,957; 3,625,751; 3,629,025; 3,770,706; 3,959,561; 4,220,739; and 4,615,914. Typically, the sulfonation is carried out by using gaseous mixtures of dry air containing from 2 to 8 percent sulfur trioxide which are then reacted with the polymeric material. Several known systems may be used to produce the sulfur trioxide. For example, oleum (concentrated sulfuric acid containing sulfur trioxide) ($H_2S_3O_{10}$) has been used as source of sulfur trioxide gas. In such a system, dry air is passed through the oleum to facilitate sulfur trioxide stripping of the oleum by mass transfer.

Cameron et al, U.S. Patent No. 4,663,142 discloses a continuous process for the generation of sulfur trioxide from oleum which introduces oleum feed to a sulfur trioxide desorption tower to form a gaseous mixture of dry air and sulfur trioxide. Masse et al, U.S. Patent No. 4,673,560 teaches a process and apparatus for the generation of sulfur trioxide using microwave energy. A sulfur trioxide-rich oleum feed is subjected to microwave energy for a time sufficient to produce a sulfur trioxide vapor which is then mixed with dry air.

GB 1,595,928 describes an apparatus with a multi-station indexing system for sulfonating the interior of resinous containers which process comprises treating said containers with various gases and $SO_3$.

In all these processes, large amounts of spent acid are produced which must be disposed of or recycled in some manner. See also Walles, U.S. Patent No. 4,615,914, which teaches conversion of solid pills of polymeric sulfur trioxide into an air-sulfur trioxide gas mixture via microwave energy. This process leaves no residue.

GB-A-2,060,653 discloses a method for the sulfonation of polypropylene filling bodies ensuring an improved uniformity of the reaction by intermittently contacting said bodies with $SO_3$ gas and a neutralizing substance such as ammonia.

Other systems involve the use of sulfonation mixtures comprising $SO_3$ (and fumic sulfuric acid) dissolved in halocarbons. Patent Abstracts of Japan, Vol. 3, No. 59 (C-46), 19 May 1979, JPR 5436216, discloses the use of a mixture containing fumic sulfuric acid, $SO_3$ and carbontetrachloride for the sulfonation of $C_{10-22}$ internal olefins which are soluble in the $CCl_4$ phase.

U.S. Patent No. 4,209,592 is directed to a method for sulfonating resin beads from gel type vinyl polymers by treatment with liquid $SO_3$ being dissolved in a chlorinated hydrocarbon.

One use of sulfur trioxide has been the surface treatment of a variety of polymeric resins to chemically modify their surfaces by a sulfonation reaction. For example, such surface sulfonated polymers are useful as substrates for painting and metal coating and are also useful as enclosure members for containing hydrocarbons such as gasoline, and the like. Exemplary uses include containers such as gasoline and other fuel tanks, fuel barrels and drums; oleaginous food containers such as bags, tubs and cartons; fibrous materials for use in carpets, clothing and other fabric; polymeric substrates and metal-clad polymers such as capacitors, auto parts and the like; and polymeric substrates for use in electrostatic spray painting and the like.

Likewise, various medical devices are fabricated of or contain a variety of polymeric resins such as polycarbonates, polyurethanes, polysiloxanes and polyolefins. These polymeric resins are used to form housings, tubes, valves, and the like. Many of these medical devices are designed to come into contact with blood or other body fluids, either during removal from the body, during treatment of the fluid, or during the return of the fluid to the body. For example, such devices may include blood filters, blood oxygenators, dialyzers, tubing and the like. One basic requirement for all such medical devices is that the surfaces which contact the blood or other body fluid of a patient be water wettable.

Wettability is needed to prevent air bubbles from sticking to a surface and ending up in a patient's blood, or causing irregular flow through a tube, or the like. Wettability is also important for preventing blood from sticking to or coagulating on a surface. However, most, if not all, of the polymeric resins utilized in such medical devices have hydrophobic surface properties. Sulfonation of such surfaces becomes necessary to modify the surface properties of such resins to make those surfaces hydrophilic.

However, because such devices are to be used in medical applications and are designed to come into contact with body fluids, the sulfonation reaction must be controlled carefully. The strength of the sulfur trioxide must be maintained within strict limits. If the strength of the sulfur trioxide varies during treatment, the surfaces of the devices may be inadequately sulfonated necessitating the discarding of such devices. Additionally, the presence of even trace amounts of water may cause the formation of sulfuric acid which may adhere as small droplets to the surfaces of the polymer to be treated and cause local irregularities. Finally, the generation of the sulfur trioxide as well as treatment of the surfaces of these products requires large volumes of the highly dilute sulfur trioxide to be passed through the system. This results in large volumes of acid waste which must be properly disposed of or recycled in some manner.

Accordingly, there remains a need in the art for a system for generating sulfur trioxide in controllable concentrations, and with an absolute minimum of impurities for the surface treatment and sulfonation of polymeric resin materials, particularly those used in medical devices. Further, there remains a need for a system which minimizes the amount of waste acid which requires disposal.

The present invention meets those needs by providing a system for the production of a reagent solution of sulfur trioxide in a carrier and the use of the reagent solution so generated for the surface treatment of polymeric materials. The system of the present invention delivers a stream of the reagent solution and maintains the stream within narrow, but adjustable, concentration limits. Further, the system of the present invention receives and upgrades a waste stream of spent reagent solution, and discharges only a very small stream of waste, all in a single integrated generator-reactor-separator.

The reagent solution consists of sulfur trioxide in a carrier. The carrier may be either a liquid halocarbon or a gas that is nonreactive with sulfur trioxide, such as dry air.

Associated with the reagent generator is a means for introducing sulfur trioxide into the reagent generator. The sulfur trioxide may be gaseous sulfur trioxide or sulfur trioxide in a liquid vehicle, such as oleum containing from 10 to 90 percent sulfur trioxide. The sulfur trioxide is introduced from a source into a separate contact chamber and from there to the reagent generator along with the recycled spent reagent solution. The reagent generator also has associated with it a means for introducing the carrier to the reagent generator. That may be either a means for introducing a liquid halocarbon or a nonreactive gas. Finally, the reagent generator has associated with it a means for introducing oleum therein.

In the reagent generator, the sulfur trioxide, carrier and oleum are brought into contact with each other due to the mixing action which occurs by reason of the force of the introduction of these materials into the generator, thus producing the reagent solution. A means is provided for removing the reagent solution to a treatment chamber. There is also a means for removing oleum from the reagent generator for the purpose of regeneration and recycling. Residual oleum is removed from the reagent solution with a filter and may be joined with the oleum from the reagent generator prior to waste removal or recycling. The overall system is thus one which provides for recycling and reuse of the various components.

Subject-matter of the present invention is an apparatus for generating a stream of $SO_3$ reagent in a carrier in controlled concentration which comprises:

(a) a sulfur trioxide source (26);

(b) a carrier source (28, 29);

(c) an oleum source (20);

(d) a contact chamber (18) for contacting spent $SO_3$ reagent with fresh $SO_3$ from said sulfur trioxide source (26);

(e) a reagent generator (12) for contacting the spent $SO_3$ reagent with oleum to provide said $SO_3$ reagent stream;

(f) a filter (16) for removing residual oleum from said $SO_3$ reagent stream and

(g) a treatment chamber (14) for treating surfaces of a polymeric material with said $SO_3$ reagent stream,

wherein said sulfur trioxide source (26) is in controlled fluid communication (48, 54, 52) with said contact chamber (18);

said contact chamber (18) is in controlled communication (36, 38) with said reagent generator (12), and in fluid communication (34) with said treatment chamber (14);

said oleum source (20) is in a controlled fluid loop communication (72, 24, 56, 62) with said reagent chamber (18) and in fluid communication (68, 69) with said filter (16), said reagent generator (12) is in fluid communication (23) with said filter (16);

and said filter (16) is provided with a fluid communication means (25, 46) for introducing said $SO_3$ reagent stream into said treatment chamber (14).

The invention also resides in a process for generating a stream of $SO_3$ reagent in a carrier comprising the steps of:

(a) introducing sulfur trioxide, a carrier and oleum into a reagent generator (12),

wherein said carrier is selected from the group comprising an inert gas and a liquid halocarbon,

(b) contacting the sulfur trioxide, carrier and oleum to provide said stream of $SO_3$ reagent,

(c) removing oleum from said reagent generator (12),

(d) removing the $SO_3$ reagent stream from said reagent generator (12),

(e) separating residual oleum from said $SO_3$ reagent stream in a filter (16),

(f) using said $SO_3$ reagent stream and

(g) recycling spent $SO_3$ reagent from step (f) to said reagent generator (12).

The system of the present invention further includes means for recycling the oleum removed from the reagent generator back to the reagent generator to reduce the amount of waste. Further, a filter for removing residual oleum from the reagent solution is provided to prevent the retention of any sulfuric acid in the reagent feed stream. The oleum removed from the reagent solution may also be recycled to the reagent generator for reuse.

The foregoing is readily accomplished due to the immiscibility of the halocarbon and oleum as well as the differences in density between the two and the high solubility of sulfur trioxide in the halocarbon.

In the preferred embodiment, the system for generating the reagent solution also includes, in conjunction with the reagent generator, a treatment chamber in the parts treatment loop for the surface treatment of polymeric resins. For example, medical devices constructed of different polymeric materials which may have polymer fragments and/or unreacted monomers, grease, dust, bacteria and moisture on exposed surfaces thereof, may be treated therein. The medical devices treated in the system of the invention, in addition to being sulfonated, are substantially free of moisture, dust, grease and bacteria and are therefore clean and sterile.

The system further includes means for feeding the reagent solution to the treatment chamber, and means for recycling spent reagent solution back to the reagent generator.

In this embodiment of the invention, the filter is positioned between the reagent generator and the treatment chamber for removing residual oleum from the reagent solution. Further, the source of sulfur trioxide, carrier, and spent reagent solution may be contacted in a separate chamber prior to being sent to the reagent generator.

The carrier for the sulfur trioxide is a gas that is nonreactive with the sulfur trioxide such as air, nitrogen, oxygen, carbon dioxide, argon, helium or a gas such as a low boiling halocarbon. Dry air and halocarbon is preferred.

Accordingly, it is an object of the present invention to provide an apparatus for the generation a reagent solution of sulfur trioxide in a carrier and for using the reagent solution in the sulfonation of surfaces of polymeric materials. This, and other objects and advantages of the present invention, will become apparent from the following detailed description in conjunction with the accompanying drawings, wherein:

Figure 1 is a schematic diagram of the system of the present invention;

Figure 2 is a more detailed schematic diagram of one embodiment of the apparatus of the present invention;

Figure 3 is a more detailed schematic diagram of another embodiment of the apparatus of the present invention;

Figure 4 is a flow diagram showing the dynamics of the working fluid of the present invention.

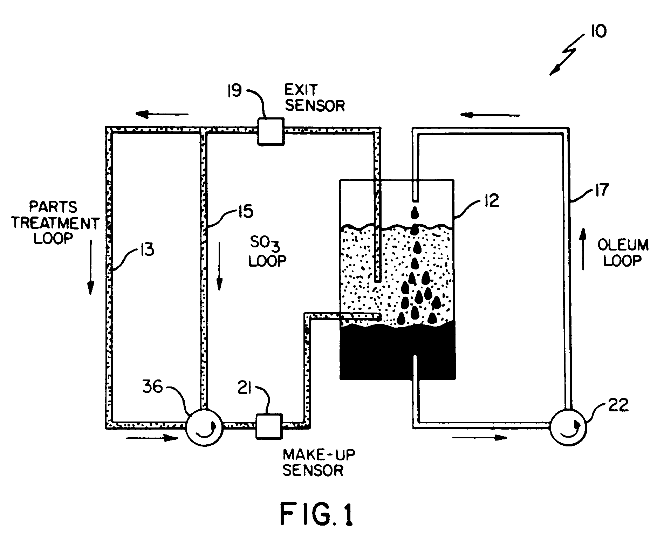

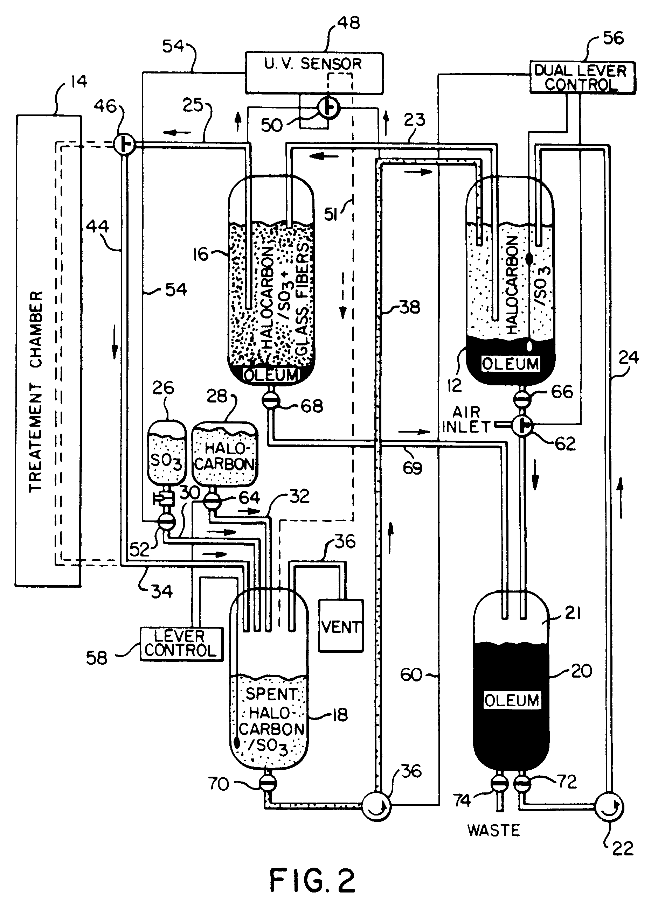

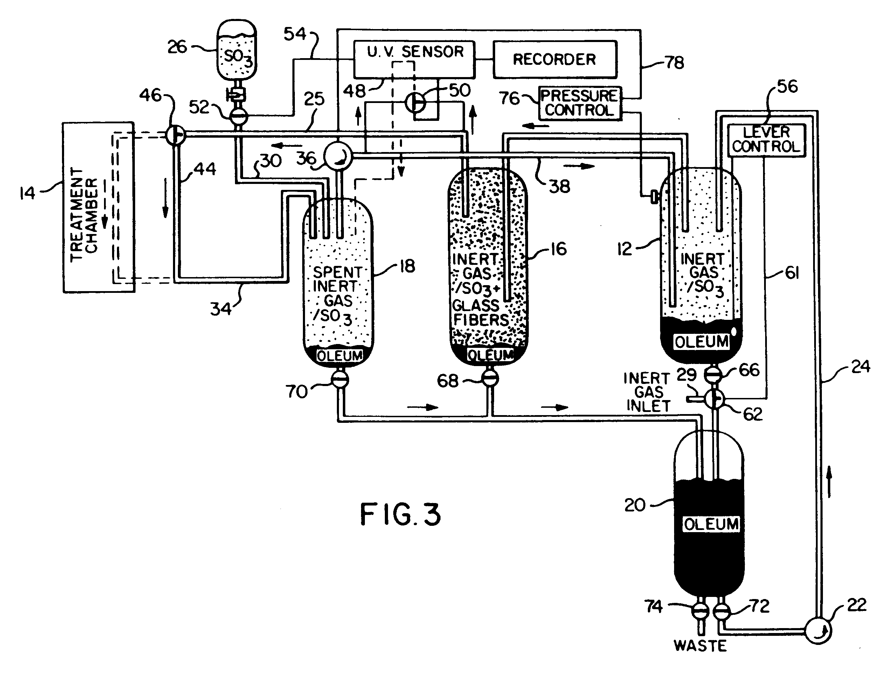

Referring now to Figure 1, there is illustrated in schematic form the system of the present invention. The system, generally identified by reference number 10. includes a reagent generator 12, a parts treatment loop 13, a sulfur trioxide recycle loop 15 and an oleum recycle loop 17. Pumps 22 and 36 are used in the oleum recycle loop 17 and in the sulfur trioxide recycle loop 15, respectively. Exit sensor 19, which senses the concentration of sulfur trioxide in the liquid halocarbon (nonreactive gas) reagent solution, and make-up sensor 21, which senses the concentration of sulfur trioxide in the returning carrier, are provided. More detailed schematic diagrams of the two embodiments of the present invention are shown in Figures 2 and 3, where like reference numerals have been used for like parts.

In Figure 2, the system is generally identified by reference number 10 and includes a treatment chamber 14 for the surface treatment and sulfonation of polymeric materials located in parts treatment loop 13. A final filter 16 is positioned between reagent generator 12 and treatment chamber 14. A separate contact chamber 18 is provided for contacting spent reagent solution with fresh sulfur trioxide from source 26 and with halocarbon from source 28 prior to being sent to reagent generator 12. An oleum source 20, communicating with reagent generator 12 is also provided.

Oleum is supplied to the reagent generator 12 from the oleum source 20 which may be a suitable storage container or chamber. The oleum is pumped by pump 22 through line 24 into reagent generator 12. Preferably, the oleum source utilized contains from 0.05 to 95 percent and preferably from 10 to 60 percent free sulfur trioxide.

Both sulfur trioxide and the halocarbon may be added directly to reagent generator 12, which in this instance is a reagent solution generator. However, in the preferred apparatus as shown, the sulfur trioxide source 26 and the halocarbon source 28 are provided, and both the sulfur trioxide and halocarbon are metered through lines 30 and 32, respectively, into contact chamber 18. Spent reagent solution from treatment chamber 14 and/or diverted reagent solution from filter 16 may also be sent to contact chamber 18 via line 34. Line 36 is provided to vent vapors formed in contact chamber 18 to the atmosphere. The mixture of sulfur trioxide, halocarbon, and spent reagent solution are sent from contact chamber 18 to reagent generator 12 using pump 36 in line 38.

Sulfur trioxide may be supplied either as a gas or preferably in a liquid vehicle from the source 26. The halocarbon is provided as a liquid. Suitable halocarbons for use in the present invention include those relatively low molecular weight halocarbons which are liquids at temperatures below about 25 °C, have viscosities below about 200 centipoise, have densities which differ from the density of oleum (approximately 1.8 to 1.9), are substantially insoluble in oleum, and do not contain any carbon to hydrogen bonds. With aspect to the latter requirement, any halocarbon containing carbon to hydrogen bonds would itself become sulfonated and soluble in oleum.

Examples of suitable halocarbons for use in the practice of the present invention include tribromofluoromethane, dibromochlorofluoromethane, bromodichlorofluoromethane, 1-bromo-1,1-dichlorotrifluoroethane, 1,2-dibromotetrafluoroethane, pentachlorofluoroethane, 1,2-difluorotetrachloroethane, 1,1,1-trichlorotrifluoroethane, 1,1,2-trichlorotrifluoroethane, trichlorofluoromethane, and other fluorinated or chlorinated alkyl hydrocarbons containing from 1 to 7 carbon atoms. A preferred halocarbon for use in the present invention is FREON™ 113, a trichlorotrifluoroethane available from E.I. du Pont de Nemours.

Reagent generator 12 functions not only as a mixer-separator, but also as a chemical reactor. The sulfur trioxide, halocarbon and oleum components of the mixture are introduced into reagent generator 12 with sufficient force to mix the components and provide contact among them so as to produce a reagent solution having a sulfur trioxide concentration of from 0.001 to 10 percent, and more preferably from 0.4 to 2 percent. Alternatively, a mixing means such as a mechanical stirrer may be used to aid in mixing the sulfur trioxide, halocarbon and oleum.

Unlike the prior art, the oleum in reagent generator 12 does not function solely as a source of sulfur trioxide. Instead, the oleum acts to remove impurities from the system.

Commercially available liquid halocarbons contain traces of both water and hydrocarbon impurities, such as pentane and/or partly halogenated lower alkanes. When such hydrocarbon impurities are not removed from the system, the reagent solution takes on a brown color. When moisture is not removed from the system, the reagent solution becomes cloudy. Likewise, commercially available sources of sulfur trioxide often contain boron oxide ($B_2O_3$) or its corresponding sulfate as an impurity. Oleum usually contains heavy metal sulfate originating from corrosion of metal surfaces with which it has come in contact. In addition, as previously mentioned, there are impurities introduced into the system from the polymer resin treatment. These impurities include moisture, grease, polymer fragments, dust, bacteria, and the like.

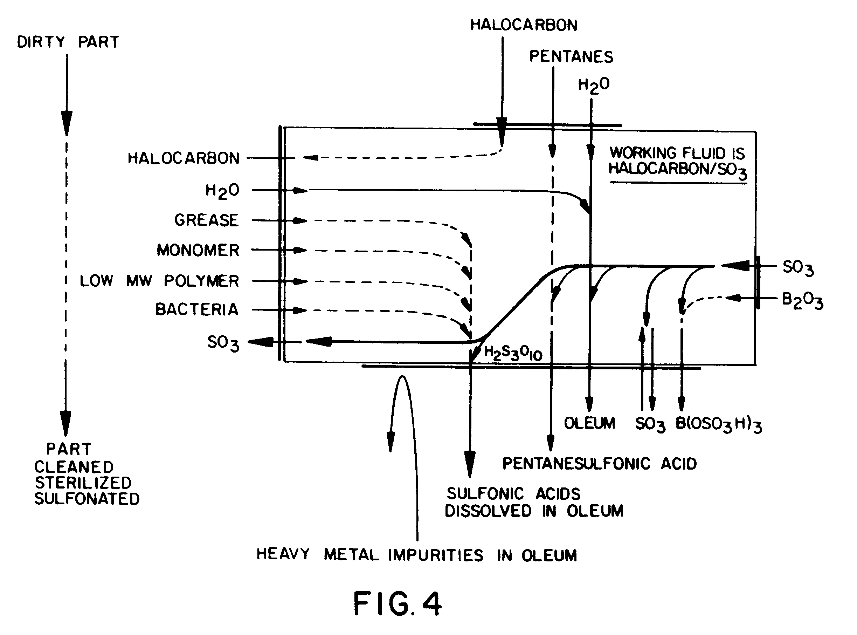

In the present system, as shown in Figure 4, these impurities, as well as any heavy metal impurities in the oleum itself, are directed to and confined to the oleum portion of the system and do not contaminate the reagent solution. Thus, some of the sulfur trioxide present reacts with any moisture present to form $H_2S_3O_{10}$ which is insoluble in the halocarbon and becomes a part of the oleum solution in reagent generator 12. Further, trace hydrocarbon impurities, such as pentane, also react with the sulfur trioxide, become sulfonated, to form, for example, pentaneosulfonic acid, and dissolve in the oleum. Again, such sulfonated hydrocarbons are not soluble in the halocarbon and are, thus, confined to the oleum portion of the system.

Any boron oxide present exists as a boron trisulfonic acid ($B(OSO_3H)_3$) which when brought into contact with the oleum in reagent generator 12 dissolves therein. The boron sulfonic acid is not soluble in the halocarbon and, therefore, is not a part of the reagent solution.

The reagent solution in contacting the polymeric resin to be treated, not only sulfonates the polymer, but also reacts with any moisture, grease, polymer fragments (monomer, low molecular weight polymer, etc.), dust, bacteria, and the like to produce various sulfonic acids.

The spent reagent solution which is recycled to contact chamber 18 from treatment chamber 14 will contain those sulfonated impurities. Upon being reintroduced into reagent generator 12 and thereby brought into contact with the oleum, the sulfonated impurities dissolve in the oleum, the reagent solution is purified and the described process begins again or simply continues, depending on whether a discontinuous batch or continuous treatment cycle is involved. Thus the reagent generator 12 acts as a gravity separator providing an upper level layer of pure reagent solution and a lower level of oleum containing sulfonated impurities. This gravity separation is readily accomplished because of the density differences between the halocarbon and oleum solutions and their immiscibility.

Of course, it will be recognized by those skilled in the art that a halocarbon liquid having a density greater than that of oleum may be selected. In that case, the reagent solution would form the lower layer in reagent generator 12, and the connections for the output lines from the reagent generator would be changed.

The concentration of sulfur trioxide in the halocarbon may be closely controlled in the system of the present invention to within a few parts per million. This is accomplished by maintaining a known concentration of oleum in reagent generator 12, controlling the addition of sulfur trioxide to the generator, and measuring the temperature therein. The distribution coefficient for free sulfur trioxide between the halocarbon and oleum solutions can be calculated readily for any given temperature. By adding sufficient make-up sulfur trioxide to the reagent generator, a controllable concentration of free sulfur trioxide will be distributed to the liquid halocarbon phase The concentration of sulfur trioxide in the halocarbon can be analytically determined by titration with a base, but preferably it is determined by an in line sensor 48 such as an ultraviolet spectrophotometer. The output signal from sensor 48 can be used to control valves 50 and 52 as explained more fully below.

Fresh reagent solution leaving reagent generator 12 is first sent through filter 16 to remove any last traces of oleum which may be suspended in the solution. Filter 16 contains a filter medium such as glass wool fibers which act to entrap and remove any oleum. As shown, the oleum drained from filter 16 is recycled to oleum source 20. It may alternatively be sent to sulfur trioxide source 26 or contact chamber 18. The reagent solution is sent to treatment chamber 14 via line 25.

Further, an internal circulating line 44 is provided to connect line 25 carrying the output from filter 16 to line 34 which is the input line for contact chamber 18. This permits the system to fully circulate and balance the sulfur trioxide in the halocarbon solution even when there is no treatment taking place in treatment chamber 14. Changing the system over from recirculation to treatment is accomplished by a valve, such as rotating T-Valve 46.

Within treatment chamber 14 are placed the polymeric resins to be treated. Alternatively in some instances the reagent solution may be flowed directly through the part to be treated (i.e. when the part is configured so as to have a substance such as blood or other body fluid flowed through it in use). In that instance the part itself becomes the treatment chamber. In a preferred embodiment of the invention, the polymeric resins form medical devices or parts thereof. However, it will be apparent that the system of the present invention can be used to treat and sulfonate the surfaces of a number of polymeric resins for a variety of purposes. The reagent solution interacts with the polymeric surface not only to clean and sterilize it, but also to chemically react with it.

The sulfur trioxide in the reagent solution removes low molecular weight polymer impurities from the surface as well as processing aids which may remain on the surface of the polymer from an earlier polymerization procedure. Further, the sulfur trioxide combines with water in the cells of any bacteria present on the surface of the polymeric resin to produce sulfuric acid which destroys the cell membranes of the bacteria. Some of the polymer fragments and dead bacteria will be removed by the reagent solution as it is circulated through the device. Additional surface impurities will be removed by later washing and rinsing steps.

The sulfur trioxide in the reagent solution also reacts with carbon to hydrogen bonds at the polymer surface to provide one or a number of monolayers of sulfonic acid functional groups at the polymer surface. Such sulfonic acid functional groups provide a number of desirable properties to the polymer surface. These include water wettability, antistatic, nondust attracting, and nonfogging surface. Further, the resulting surface releases air bubbles more readily and is slippery to blood and other body fluids to prevent coagulation. Finally, the sulfonated surface provides a reactive functional group to which other bio-active compounds can be bonded.

In a preferred form, the system of the present invention may be automatically controlled through the use of sensors and controllers. As shown in Figure 2 the sensor 48 monitors the concentration of sulfur trioxide in the halocarbon solution at the output of filter 16 and just prior to the entry of sulfur trioxide in the halocarbon solution into reagent generator 12 (illustrated by the dotted line 51). Samples of the reagent solution may be drawn from either of lines 25 or 38 and sent through sensor 48 to sense the concentration of sulfur trioxide in the reagent solution directly or indirectly by measuring the density, refractive index, or the adsorption of ultraviolet light at a selected wavelength. The T-valve 50 may be actuated and rotated by a suitable controller (not shown) to switch the sampling from line 25 to line 38.

In either event, based on the concentration of sulfur trioxide sensed by sensor 48, valve 52 may be actuated, as shown schematically by line 54, to provide additional sulfur trioxide from the source 26 to contact chamber 18, as needed

The levels of liquid in reagent generator 12 and contact chamber 18 are regulated by level controllers 56 and 58, respectively. Level controller 56 is preferably a dual level control device which can sense the level of both the oleum and halocarbon phases in reagent generator 12. As shown schematically, when additional make-up of reagent solution is needed in reagent generator 12, level controller 56 activates pump 36 via line 60. If the level of oleum in reagent generator 12 rises too high, level controller 56 actuates a valve such as T-valve 62, to rotate it from its position of open to atmosphere to a second position to drain oleum from generator 12 into oleum source 20.

Level controller 58 senses the level of liquid halocarbon in contact chamber 18. As additional liquid is required, level controller 58 actuates valve 64 to supply additional make-up halocarbon to contact chamber 18. Additional valves 66, 68, 70 and 72 are provided at the respective bases of generator 12, filter 16, contact chamber 18 and oleum source 20. While these valves are normally in the open position during operation of the system, they may be closed as needed. Further, valve 74 is provided at the base of oleum source 20 to bleed off a small portion of the oleum for disposal.

Preferably, contact chamber 18, sulfur trioxide source 26 and halocarbon source 28 are operated at atmospheric pressure, while reagent generator 12 and filter 16 are maintained at slightly above atmospheric pressure. Oleum source 20 contains trapped air 21 under hydrostatic pressure from generator 12.

In another embodiment of the invention shown schematically in Figure 3, and where like elements are represented by like reference numerals, sulfur trioxide is mixed with a gas that is nonreactive with the sulfur trioxide, such as dry air, as the reagent solution for treatment. The system includes reagent generator 12 (which in this instance is a gaseous reagent generator), treatment chamber 14, filter 16, contact chamber 18 and oleum source 20. In this embodiment of the invention, the gas, supplied through gas inlet 29, is provided to reagent generator 12 in place of the liquid halocarbon of the previous embodiment.

The reagent solution is produced in reagent generator 12 by contacting make-up sulfur trioxide and gas from contact chamber 18 with oleum provided from source 20. The reagent solution is then sent to filter 16 for removal of any traces of oleum prior to being sent to treatment chamber 14.

In treatment chamber 14, the reagent solution contacts the surfaces of the polymeric resins contained therein or when the treatment chamber 14 is the part itself, the reagent contacts the internal polymer surfaces of that part. Again, preferably, the polymeric resins form a part or all of a medical device. The reagent solution removes surface impurities, sterilizers the resin surface and reacts with the surface to sulfonate it. Spent reagent solution is then recycled to contact chamber 18 through line 34, which is the input line for contact chamber 18.

Again, the system is preferably automatically controlled. Sensor 48 samples both the reagent solution leaving filter 16 as well as the spent reagent solution in contact chamber 18. Based on the concentrations sensed, a controller (not shown) actuates a valve, such as T-valve 52, to supply additional make-up sulfur trioxide as needed from sulfur trioxide source 26.

The pressure in reagent generator 12 is sensed by pressure controller 76. If additional reagent solution is required, controller 76 activates pump 36 via line 78 to provide the additional amount of sulfur trioxide in the inert gas. Level controller 56 senses the level of oleum in generator 12 and actuates a valve, such as T-valve 62, through line 61 as necessary to drain excess oleum from the reagent generator. A small amount of oleum is bled from the system through valve 74 as required and is disposed of by suitable means.

Again, sulfur trioxide source 26 and contact chamber 18 are maintained at atmospheric pressure while reagent generator 12 is maintained at slightly above atmospheric pressure. Inert gas is also supplied to oleum source 20 at slightly above atmospheric pressure.

As can be seen, both embodiments to the present invention provide systems for the production of sulfur trioxide reagent solution which may then be used in the surface treatment and sulfonation of polymeric materials. The systems of the present invention delivers a stream of reagent solution while maintaining the concentration of sulfur trioxide in the reagent solution within narrow, but adjustable, limits. Further, the system of the present invention minimizes waste acid by receiving and upgrading spent reagent solution all within an integrated reactor-separator chamber.

While certain representative embodiments and details have been shown for purposes of illustrating the invention, it will be apparent to those skilled in the art that various changes in the methods and apparatus disclosed herein may be made without departing from the scope of the invention, which is defined in the appended claims.

## Claims

1. An apparatus for generating a stream of $SO_3$ reagent in a carrier in controlled concentration which comprises:

   (a) a sulfur trioxide source (26);

   (b) a carrier source (28, 29);

   (c) an oleum source (20);

   (d) a contact chamber (18) for contacting spent $SO_3$ reagent with fresh $SO_3$ from said sulfur trioxide source (26);

   (e) a reagent generator (12) for contacting the spent $SO_3$ reagent with oleum to provide said $SO_3$ reagent stream;

   (f) a filter (16) for removing residual oleum from said $SO_3$ reagent stream and

   (g) a treatment chamber (14) for treating surfaces of a polymeric material with said $SO_3$ reagent stream,

   wherein said sulfur trioxide source (26) is in controlled fluid communication (48, 54, 52) with said contact chamber (18);

   said contact chamber (18) is in controlled communication (36, 38) with said reagent generator (12), and in fluid communication (34) with said treatment chamber (14);

said oleum source (20) is in a controlled fluid loop communication (72, 24, 56, 62) with said contact chamber (18) and in fluid communication (68, 69) with said filter (16), said reagent generator (12) is in fluid communication (23) with said filter (16);

and said filter (16) is provided with a fluid communication means (25, 46) for introducing said $SO_3$ reagent stream into said treatment chamber (14).

2. Apparatus according to claim 1, wherein said oleum source (20) is provided with an oleum bleeding valve (74).

3. Apparatus according to claim 1 or 2, wherein said carrier source comprises an inert gas inlet (29) in the fluid communication loop (72, 24, 56, 62) going from the reagent generator (12) to the oleum source (20).

4. Apparatus according to any one of the preceding claims, wherein said carrier source comprises a means (28) for introducing a liquid halocarbon.

5. Apparatus according to claim 4, wherein said means (28) is in controlled fluid communication (58, 64, 32) with said contact chamber (18).

6. Process for generating a stream of $SO_3$ reagent in a carrier comprising the steps of:
   (a) introducing sulfur trioxide, a carrier and oleum into a reagent generator (12), wherein said carrier is selected from the group comprising an inert gas and a liquid halocarbon,
   (b) contacting the sulfur trioxide, carrier and oleum to provide said stream of $SO_3$ reagent,
   (c) removing oleum from said reagent generator (12),
   (d) removing the $SO_3$ reagent stream from said reagent generator (12),
   (e) separating residual oleum from said $SO_3$ reagent stream in a filter (16),
   (f) using said $SO_3$ reagent stream and
   (g) recycling spent $SO_3$ reagent from step (f) to said reagent generator (12).

7. The process of claim 6, including the step of recycling the oleum removed from the reagent generator (12) back to the reagent generator (12).

8. The process of claim 6, including the step of recycling the residual oleum from the filter (16) back to the reagent generator (12).

9. The process of any one of the claims 6 to 8 wherein the sulfur trioxide is introduced into a separate contact chamber (18) containing the spent reagent solution prior to being sent to the reagent generator (12) with the recycled spent reagent solution.

10. The process of claim 6 wherein step (f) comprises:
    f1. feeding the reagent solution to a treatment chamber (14) for a polymeric resinous material and
    f2. contacting the surface of the polymeric resinous material with the reagent solution.

11. Use of an apparatus according to any one of claims 1-5 in a process for the surface treatment and sulfonation of polymeric materials.

**Patentansprüche**

1. Vorrichtung zum Erzeugen eines Stroms eines $SO_3$-Reagenzes in einem Träger in geregelter Konzentration, welches umfaßt:
   (a) eine Schwefeltrioxidquelle (26)
   (b) eine Trägerquelle (28, 29)
   (c) eine Oleumquelle (20)
   (d) eine Kontaktkammer (18) zum in Kontakt Bringen von verbrauchtem $SO_3$-Reagenz mit frischem $SO_3$ aus der Schwefeltrioxidquelle (26)
   (e) einen Reagenzgenerator (12) zum in Kontakt Bringen des verbrauchten $SO_3$-Reagenzes mit Oleum, um den $SO_3$-Reagenzstrom bereitzustellen
   (f) ein Filter (16) zum Entfernen von restlichem Oleum aus dem $SO_3$-Reagenzstrom und
   (g) eine Behandlungskammer (14) zum Behandeln von Oberflächen eines Polymermaterials mit dem $SO_3$-Reagenzstrom
   wobei die Schwefeltrioxidquelle (26) in geregelter Fluidverbindung (48, 54, 52) mit der Kontaktkammer (18) steht,
   die Kontaktkammer (18) in geregelter Verbindung (36, 38) mit dem Reagenzgenerator (12) und in Fluidverbindung (34) mit der Behandlungskammer (14) steht,
   die Oleumquelle (20) in einer geregelten Fluidverbindungsschleife (72, 24, 56, 62) mit der Kontaktkammer (18) und in Fluidverbindung (68, 69) mit dem Filter (16) steht, der Reagenzgenerator (12) in Fluidverbindung (23) mit dem Filter (16) steht

und der Filter (16) mit einem Fluidverbindungsmittel (25, 46) zum Einführen des SO$_3$-Reagenzstroms in die Behandlungskammer (14) ausgestattet ist.

2. Vorrichtung nach Anspruch 1, wobei die Oleumquelle (20) mit einem Oleumablaßventil (74) versehen ist.

3. Vorrichtung nach Anspruch 1 oder 2, wobei die Trägerquelle einen Inertgaseinlaß (29) in der Fluidverbindungsschleife (72, 24, 56, 62) umfaßt, die zwischen dem Reagenzgenerator (12) und der Oleumquelle (20) verläuft.

4. Vorrichtung nach einem der vorhergehenden Ansprüche, wobei die Trägerquelle ein Mittel (28) zum Einleiten eines flüssigen Halogenkohlenstoffs umfaßt.

5. Vorrichtung nach Anspruch 4, wobei das Mittel (28) in geregelter Fluidverbindung (58, 64, 32) mit der Kontaktkammer (18) steht.

6. Verfahren zum Erzeugen eines Stroms eines SO$_3$-Reagenzes in einem Träger, umfassend die Schritte:
   (a) Einbringen von Schwefeltrioxid, einem Träger und Oleum in einen Reagenzgenerator (12),
   wobei der Träger ausgewählt ist aus der Gruppe, umfassend ein Inertgas und einen flüssigen Halogenkohlenstoff
   (b) in Kontakt bringen des Schwefeltrioxids, Trägers und Oleums, um den SO$_3$-Reagenzstrom bereitzustellen,
   (c) Entfernen von Oleum aus dem Reagenzgenerator (12)
   (d) Entfernen des SO$_3$-Reagenzstroms aus dem Reagenzgenerator (12)
   (e) Abtrennen von restlichem Oleum aus dem SO$_3$-Reagenzstrom in einem Filter (16)
   (f) Verwenden des SO$_3$-Reagenzstroms und
   (g) Rückführen von verbrauchtem SO$_3$-Reagenz aus Schritt (f) zum Reagenzgenerator (12).

7. Verfahren nach Anspruch 6, umfassend den Rückführungsschritt des aus dem Reagenzgenerator (12) entfernten Oleums zurück zum Reagenzgenerator (12).

8. Verfahren nach Anspruch 6, umfassend den Rückführungsschritt des restlichen Oleums vom Filter (16) zurück zum Reagenzgenerator (12).

9. Verfahren nach einem der Ansprüche 6 bis 8, wobei das Schwefeltrioxid in eine separate Kontaktkammer (18), die die verbrauchte Reagenzlösung enthält, eingeleitet wird, bevor es mit der rückgeführten verbrauchten Reagenzlösung zum Reagenzgenerator (12) geleitet wird.

10. Verfahren nach Anspruch 6, wobei der Schritt (f) umfaßt:
    f1. Einspeisung der Reagenzlösung in eine Behandlungskammer (14) für ein Polymerharzmaterial und
    f2. in Kontakt bringen der Oberfläche des Polymerharzmaterials mit der Reagenzlösung.

11. Verwendung einer Vorrichtung nach einem der Ansprüche 1 bis 5 in einem Verfahren zur Oberflächenbehandlung und Sulfonierung von Polymermaterialien.

**Revendications**

1. Appareil destiné à générer un courant de réactif SO$_3$ dans un fluide porteur, à une concentration contrôlée, comprenant:
   (a) une source de trioxyde de soufre (26),
   (b) une source de fluide porteur (28, 29),
   (c) une source d'oléum (20),
   (d) une chambre de contact (18) destinée à la mise en contact de réactif SO$_3$ épuisé avec du SO$_3$ frais de ladite source de trioxyde de soufre (26),
   (e) un générateur de réactif (12) destiné à la mise en contact du réactif SO$_3$ épuisé avec de l'oléum, pour fournir ledit courant de réactif SO$_3$,
   (f) un filtre (16) destiné à éliminer l'oléum résiduel dudit courant de réactif SO$_3$, et
   (g) une chambre de traitement (14) destinée au traitement de surfaces d'un matériau polymère par le courant de réactif SO$_3$,
   dans lequel la source de trioxyde de soufre (26) est en communication de fluide contrôlée (48, 54, 52) avec ladite chambre de contact (18),
   ladite chambre de contact (18) est en communication contrôlée (36, 38) avec ledit générateur de réactif (12) et en communication de fluide (34) avec ladite chambre de traitement (14),
   ladite source d'oléum (20) est en communication de circuit de fluide contrôlée (72, 24, 56, 62) avec ladite chambre de contact (18) et en communication de fluide (68, 69) avec ledit filtre (16),
   ledit générateur de réactif (12) est une communication de fluide (23) avec ledit filtre (16),

et ledit filtre (16) est pourvu d'un moyen de communication de fluide (25, 46) destiné à introduire ledit courant de réactif SO₃ dans ladite chambre de traitement (14).

2. Appareil selon la revendication 1, dans lequel ladite source d'oléum (20) est pourvue d'une soupape de purge d'oléum (74).

3. Appareil selon la revendication 1 ou 2, dans lequel ladite source de fluide porteur comprend une entrée de gaz inerte (29) dans le circuit de communication de fluide (72, 24, 56, 62) allant du générateur de réactif (12) à la source d'oléum (20).

4. Appareil selon l'une quelconque des revendications précédentes, dans lequel ladite source de fluide porteur comprend un moyen (28) pour introduire un hydrocarbure halogéné liquide.

5. Appareil selon la revendication 4, dans lequel ledit moyen (28) est en communication de fluide contrôlée (58, 64, 32) avec ladite chambre de contact (18).

6. Procédé pour générer un courant de réactif SO₃ dans un fluide porteur, comprenant les étapes consistant à:

(a) introduire du trioxyde de soufre, un fluide porteur et de l'oléum dans un générateur de réactif (12),

dans lequel ledit fluide porteur est choisi dans le groupe formé par un gaz inerte et un hydrocarbure halogéné liquide,

(b) mettre en contact le trioxyde de soufre, le fluide porteur et l'oléum, pour fournir ledit courant de réactif SO₃,

(c) évacuer l'oléum dudit générateur de réactif (12),

(d) évacuer le courant de réactif SO₃ dudit générateur de réactif (12),

(e) séparer l'oléum résiduel dudit courant de réactif SO₃, dans un filtre (16),

(f) utiliser ledit courant de réactif SO₃, et

(g) recycler le réactif SO₃ épuisé de l'étape (f) vers ledit générateur de réactif (12).

7. Procédé selon la revendication 6, comprenant l'étape consistant à recycler l'oléum évacué du générateur de réactif (12) vers le générateur de réactif (12).

8. Procédé selon la revendication 6, comprenant l'étape consistant à recycler l'oléum résiduel du filtre (16) vers le générateur de réactif (12).

9. Procédé selon l'une quelconque des revendications 6 à 8, dans lequel le trioxyde de soufre est introduit dans une chambre de contact (18) séparée contenant la solution de réactif épuisée avant d'être envoyé vers le générateur de réactif (12) avec la solution de réactif épuisée recyclée.

10. Procédé selon la revendication 6, dans lequel l'étape (f) comprend:

f1. l'alimentation de la solution de réactif vers une chambre de traitement (14) pour un matériau résineux polymère, et

f2. la mise en contact de la surface du matériau résineux polymère avec la solution de réactif.

11. Utilisation d'un appareil selon l'une quelconque des revendications 1 à 5 dans un procédé pour le traitement de surfaces et la sulfonation de matériaux polymères.

FIG.1

FIG.2

FIG. 3

FIG. 4

EP 0 340 617 B1